# EUROPÄISCHE PATENTANMELDUNG

(11) **EP 0 997 207 A2**
(43) Veröffentlichungstag der Anmeldung: **03.05.2000**
(21) Anmeldenummer: 99250343.3
(22) Anmeldetag: 28.09.1999
(51) Int. Cl.: B21D 37/20, B21D 24/00, B23P 15/24, B22D 19/00

(54) **Werkzeug und Verfahren zum Herstellen eines Werkzeugs**

(30) Priorität: 02.10.1998 DE 19847257
(71) Anmelder: DaimlerChrysler AG, 70567 Stuttgart (DE)
(72) Erfinder: Häussermann Markus, 74074 Heilbronn (DE)
(74) Vertreter: Lindner-Vogt, Karin

(57) **Zusammenfassung**

Beim vorliegenden Werkzeug (2) zum Bearbeiten von metallischen blechartigen Formteilen (4), wobei das Werkzeug (2) wenigstens einen Bestandteil (10-14) zum Ausüben einer Kraft aufweist, ist wenigstens einer der Bestandteile (10-14) des Werkzeugs (2) angenähert parallel zur kraftausübenden Richtung des Bestandteils (10-14) mit kanalartigen Aussparungen (20) in einem vorgegebenen Muster versehen, die sich wenigstens über einen Großteil der Länge des Bestandteils (10-14) erstrecken und einen vorgegebenen Querschnitt (38) aufweisen. Durch diese Maßnahmen ist eine gleichmäßige vertikale Drucksteifigkeit gewährleistet.

## Beschreibung

Die Erfindung bezieht sich auf ein Werkzeug zum Bearbeiten von metallischen blechartigen Formteilen und auf ein Verfahren zum Herstellen eines solchen Werkzeugs.

Im Bereich der Großwerkzeuge zur Karosserieherstellung werden fast ausschließlich Gußwerkzeuge eingesetzt. Dieser Trend ist unter anderem mit den flexiblen Gestaltungsmöglichkeiten einer Gußkonstruktion zu begründen. Betrachtet man die Verrippung solcher Werkzeuge, so findet man überwiegend Konstruktionen, bei denen die Rippen orthogonal zueinander und orthogonal zur Werkzeuggrundfläche angeordnet sind. Als Verrippung wird in der Fachsprache das Versehen des Werkzeugs mit Aussparungen zur Gewichtsreduzierung bezeichnet. Die aus dem Stand der Technik bekannten Ausführungen orientieren sich in ihrem Aussehen an Schweißkonstruktionen.

Schweißkonstruktionen werden aus einzelnen Platten aufgebaut, die das typische Aussehen dieser Werkzeuge prägen. Die Folge sind ungünstige Kraftverläufe. Insbesondere bei Ziehwerkzeugen gibt es am Ziehteilflansch zwischen Niederhalter und Matrize Stellen, an denen hohe Flächenpressungen infolge darunterliegender Rippen auftreten. Zwischen den Rippen dagegen, nämlich im Bereich über den Aussparungen, ist nur eine geringe Flächenpressung vorhanden. Aus diesem Grund müssen die Ziehrahmenflächen des Niederhalters und der Matrize dick ausgeführt sein, um die unerwünschten Nebeneffekte zu vermindern.

Die Hauptaufgabe des Systems Matrize/Niederhalter ist es das Blech am Flansch so einzuspannen, daß beim Einziehen infolge der tangentialen Druckspannungen keine Falten im Blech entstehen und der Materialfluß zwischen Matrize und Niederhalter über lokal unterschiedliche Flächenpressungen optimal gesteuert wird. Die Flächenpressung darf nicht zu hoch sein, da sonst Risse auftreten. Bei zu niedriger Flächenpressung treten Falten auf. Es muß also ein gezieltes Nachfließen des Blechs innerhalb der beiden Versagensgrenzen "Risse" und "Falten" ermöglicht werden.

Untersuchungen zeigen, daß sich bei einigermaßen steifen Pressentisch und -stößel die horizontale Biegesteifigkeit der Werkzeugkomponenten nur unwesentlich auf die Flächenpressung am Ziehteilflansch auswirkt. Maßgebend ist fast ausschließlich die vertikale Drucksteifigkeit der Werkzeugkomponenten.

Betrachtet man die bisher üblichen Werkzeugstrukturen, so bemerkt man in der Niederhalterfläche über den Rippen eine hohe Drucksteifigkeit, zwischen den Rippen hingegen eine sehr geringe Drucksteifigkeit. Ziel ist es, eine möglichst gleichmäßige vertikale Drucksteifigkeit zu erzielen, wobei die horizontale Biegesteifigkeit nicht von Bedeutung ist.

Zunehmend werden "intelligente Ziehkissen" eingesetzt. Diese ermöglichen es, die Pinolenkräfte bzw. -höhen während des Ziehvorgangs einzeln zu steuern und somit die Flächenpressung am Ziehteilflansch gezielt zu beeinflussen. Untersuchungen der Funktion des Niederhalters zeigen, daß nur ein Niederhalter mit hoher vertikaler Drucksteifigkeit die Pinolenkräfte gleichmäßig auf eine definierte Fläche am Ziehteilflansch überträgt. Auch hier ist die Biegesteifigkeit von untergeordneter Bedeutung.

Der Erfindung liegt nun die Aufgabe zugrunde, ein Werkzeug zum Bearbeiten von metallischen blechartigen Formteilen anzugeben, wobei das Werkzeug eine hohe gleichmäßige vertikale Drucksteifigkeit aufweist, welche mit nur geringem finanziellen Aufwand erreicht wird. Außerdem soll ein Verfahren zu seiner Herstellung angegeben werden.

Die Erfindung wird gelöst durch ein Werkzeug zum Bearbeiten von metallischen blechartigen Formteilen, wobei das Werkzeug wenigstens einen Bestandteil zum Ausüben einer Kraft aufweist, wobei gemäß der Erfindung wenigstens einer der Bestandteile des Werkzeugs angenähert parallel zur kraftausübenden Richtung des Bestandteils kanalartige Aussparungen in einer musterartigen Anordnung aufweist, wobei sich die kanalartigen Aussparungen wenigstens über einen Großteil der Länge des Bestandteils erstrecken und einen vorgegebenen Querschnitt aufweisen.

Die Verrippung der Werkzeuggrundkörper, d.h. der Bestandteile des Werkzeugs mit kanalartigen Aussparungen, gewährleistet eine hohe vertikale und lokal gleichmäßige Drucksteifigkeit der Werkzeugkomponenten, was ein entscheidendes Kriterium für eine optimale Verteilung der Kräfte ist. Infolge der relativ kleinen Hohlräume und der dünnen Wände zwischen den Hohlräumen lassen sich hohe Masseneinsparungen erzielen. Insbesondere auch deshalb, weil über den kleineren Hohlräumen eine weniger dicke Ziehrahmenfläche erforderlich ist, da die Durchbiegungen aufgrund der kleineren nicht abgestützten Bereiche geringer sind. Zudem lassen sich kleinere Hohlräume besser anordnen um größere unverrippte Bereiche in den Randzonen zu vermeiden. Aufgrund der besseren Steifigkeitseigenschaften bei geringerem Materialaufwand werden die Kosten für die Werkzeugherstellung entscheidend verringert.

Aufgrund der bereits vorhandenen gleichmäßigen vertikalen Steifigkeit kann der Tuschieraufwand deutlich reduziert werden. Als Tuschieren wird der Bearbeitungsvorgang bezeichnet, bei dem durch manuelles Abtragen von Werkstoffmaterial vom Werkzeug eine gleichmäßige Flächenpressung erzeugt wird. Da das Tuschieren sehr arbeitsintensiv ist, kann durch die Reduktion des Tuschieraufwands eine hohe Kosteneinsparung erreicht werden.

Der Einsatz von kanalartigen Aussparungen mit einfachen geometrischen Grundflächen ist ideal für den rechnerunterstützten Werkzeugentwurf geeignet, da sich die Hohlräume mittels einfacher Algorithmen in den Werkzeuggrundkörper einpassen lassen, wobei hohe Gewichtseinsparungen erzielt werden können.

Die Konstruktionszeiten für die Werkzeuggrundkörper lassen sich drastisch reduzieren, was ebenfalls gleichbedeutend mit einer hohen Kosteneinsparung ist.

Vorzugsweise ist der Querschnitt der kanalförmigen Aussparungen kreisförmig. Die einfachste Art prismatisch verrippte Werkzeuggrundkörper zu entwerfen, ist durch eine Verwendung von zylinderartigen Hohlräumen als kanalartige Aussparungen gewährleistet. Die Zylinder haben als Querschnitt Kreisflächen gleichen Durchmessers, die sich mit sehr einfachen Algorithmen in die Querschnittfläche des Werkzeuggrundkörpers einfügen lassen. Damit ist diese Verrippungsvariante ideal für den automatisierten Entwurf des Werkzeuggrundkörpers mittels CAD (Computer Added Design) geeignet.

Für die Bestimmung der Abmessungen und Flächenverhältnisse im Verrippungsquerschnitt lassen sich einfache Regeln erstellen. So richtet sich die minimale Wandstärke zwischen den Hohlräumen nach der Gießbarkeit bzw. Viskosität des jeweiligen Werkstoffs.

Der tragende Flächenanteil kann aus der geforderten Werkzeugsteifigkeit abgeleitet werden. Mit der minimalen Wandstärke und dem tragenden Flächenanteil kann der Durchmesser der kanalartigen Aussparungen bestimmt werden.

Die Zylinder werden senkrecht zur Werkzeuggrundfläche bis zu einer oberen Hilfskonstruktionsfläche, die parallel zur Ziehrahmenfläche ist, gezogen. Je nach Stempelkontur und Anordnung der Zylinder in der Querschnittsfläche können entsprechende Gewichtseinsparungen erreicht werden.

Insbesondere kann der Querschnitt verschiedene Durchmesser aufweisen. Die prismatische Verrippung mit Zylindern unterschiedlicher Durchmesser basiert auf dem gleichen Prinzip wie die oben genannte Verrippungsvariante mit konstantem Durchmesser. Bei der automatisierten Verrippung des Werkzeuggrundkörpers sind allerdings komplexere Algorithmen zur Anordnung der Zylinder im Verrippungsquerschnitt erforderlich. Prinzipiell sollte die Anzahl der unterschiedlichen Zylinderdurchmesser gering gehalten werden, um einfachere Algorithmen verwenden zu können.

Für die geforderte minimale Wandstärke und den erforderlichen tragenden Flächenanteil kann ein idealer Durchmesser für die größten Zylinder ermittelt werden. Wenn kleinere Zylinder zwischen den großen Zylindern angeordnet werden sollen, gibt es einen Durchmesser für die kleineren Zylinder, der eine geeignete Ausnutzung der optimalen minimalen Wandstärke ermöglicht. Für die nächst kleineren Zylinder ergibt sich wieder ein eindeutiges Optimum für den Durchmesser. Auf diesen basierend läßt sich für die Anfangsbedingungen minimale Wandstärke und tragender Flächenanteil jeweils eine eindeutige und optimale Staffelung von Zylinderdurchmessern bestimmen.

In der Regel sind dabei zwei bis drei unterschiedliche Durchmesser ausreichend. Auf diese Weise läßt sich das Werkzeuggewicht weiter reduzieren, wenn der tatsächlich tragende Flächenanteil aufgrund der mindestens erforderlichen Wandstärke über dem mindestens erforderlichen tragenden Flächenanteil liegt. Des weiteren können aufgrund der kleineren zur Verfügung stehenden Zylinderdurchmesser Randbereiche besser mit Hohlräumen gefüllt werden. Dies ist insbesondere bei unregelmäßigen Stempelkonturen von Vorteil.

In einer weiteren Ausgestaltung ist der Querschnitt der kanalförmigen Aussparungen eckig, insbesondere sechseckig. In den meisten Leichtbauanwendungsgebieten haben bereits wabenartige Strukturen (insbesondere sechseckige Strukturen) Einzug gehalten; beispielsweise bei Verpackungsmaterialien und im Flugzeugbau. Der Grund ist die hohe Steifigkeit einer solchen Struktur in Bezug auf ihr geringes Gewicht. Die wabenartigen Strukturen haben idealerweise eine hohe Drucksteifigkeit in Axialrichtung der Waben. Somit erfüllt diese Struktur die oben genannten Bedingungen für eine ideale Verrippung des Werkzeuggrundkörpers. Die Waben müssen sich nicht zwangsläufig an den sechseckigen Bienenwaben orientieren. Prinzipiell können völlig unterschiedliche Arten von prismatischen Strukturen eingesetzt werden.

Insbesondere können die so strukturierten Werkzeuge zum Tiefziehen, zum Nachformen, zum Schneiden oder zum Abkanten eingesetzt werden.

Die Aufgabe wird gelöst durch ein Verfahren zum Herstellen eines Werkzeugs, wobei ein Gießereimodell für wenigstens einen der Bestandteile aus einem extrudierten Modellblock (beispielsweise aus Exporit oder Styropor) mit bereits eingearbeiteten kanalartigen Aussparungen und einer auf dem extrudierten Modellblock angeordneten Modellplatte aus denselben Werkstoffen aufgebaut wird.

Weitere vorteilhafte Ausgestaltungen der Erfindung sind in den Unteransprüchen wiedergegeben

Die Erfindung ist anhand von Ausführungsbeispielen in den Zeichnungsfiguren näher erläutert. Es zeigen:
- FIG 1: ein Werkzeug zur Bearbeiten von metallischen blechartigen Formteilen in schematischer Seitenansicht,
- FIG 2: Querschnitte verschiedener Verrippungsgeometrien, und
- FIG 3: einen Aufbau eines Gießereimodells mit extrudierten Modellblöcken in schematischer Darstellung.

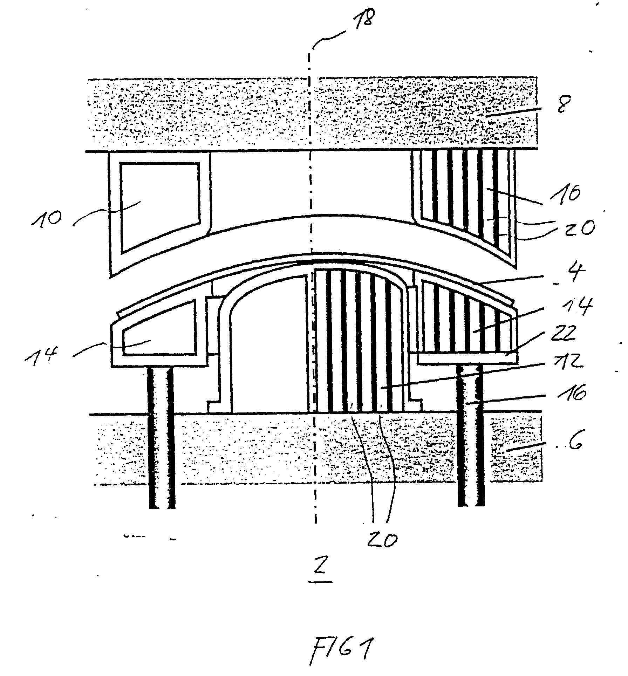

FIG 1 zeigt ein Werkzeug 2 zum Bearbeiten eines metallischen blechartigen Formteils 4 in schematischer Seitenansicht. Das Werkzeug 2 hat die Funktion eines Ziehwerkzeugs, wobei zwischen einem Pressentisch 6 und einem Pressenstößel 8 Bestandteile 10 bis 14 angeordnet sind. Die Bestandteile 10 bis 14 sind in diesem Ausführungsbeispiel als Matrize, als Ziehstempel und als Niederhalter ausgeführt.

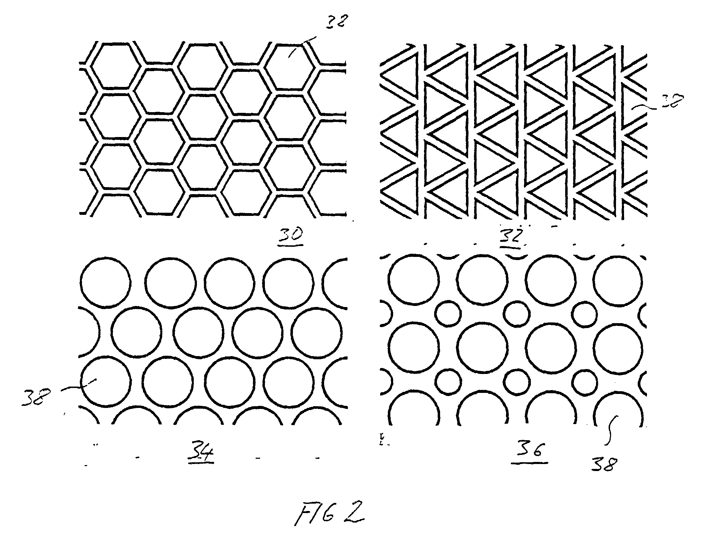

Der Niederhalter (Bestandteil 14) ist über eine Pilone 16 zwischen dem Pressenstößel 8 und dem Pressentisch 6 beweglich angeordnet. Die einzelnen Bestandteile 10 bis 14 sind während des Bearbeitungsprozesses entlang der Achse 18 in beide Richtungen, den jeweiligen kraftausübenden Richtungen, bewegbar. Die Bestandteile 10 bis 14 üben somit eine Kraft auf das Formteil 4 aus. Die kraftausübende Richtung der Bestandteile 10 bis 14 ist somit ebenfalls durch die Achse 18 definiert. Die Bestandteile 10 bis 14 weisen jeweils angenähert parallel zur kraftausübenden Richtung der Bestandteile 10 bis 14 angeordnete kanalartige Aussparungen 20 auf. Diese erstrecken sich über einen Großteil der Länge der Bestandteile 10 bis 14 und weisen einen vorgegebenen Querschnitt auf. Die kanalartigen Aussparungen sind in einem gleichmäßigen Muster angeordnet (siehe auch FIG 2).

In einem weiteren nicht dargestellten Ausführungsbeispiel weist nur ein Bestandteil zum Ausüben einer Kraft kanalartige Aussparungen auf. Es ist also nicht notwendig, daß jeweils alle Bestandteile 10 bis 14 des Werkzeugs 2 mit kanalartigen Aussparungen versehen sind. In entsprechenden nicht dargestellten Ausführungsformen ist das Werkzeug auch zum Nachformen, zum Schneiden und/oder zum Abkanten von Formteilen geeignet.

Die Hauptaufgabe des Systems Matrize/Niederhalter ist es, das Formteil 4 so einzuspannen, daß beim Einziehen infolge der tangentialen Druckspannungen keine Falten entstehen und der Materialfluß zwischen Matrize und Niederhalter über lokal unterschiedliche Flächenpressungen optimal gesteuert wird. Die Flächenpressung darf dabei nicht zu hoch sein, da sonst Risse auftreten. Bei zu niedriger Flächenpressung treten Falten auf. Es muß also ein gezieltes Nachfließen des Blechs innerhalb der beiden Versagensgrenzen gewährleistet sein.

Ausgangspunkt der Gestaltung der Werkzeugsgrundkörper sind die geometrischen Informationen über die Ziehteilgeometrie, aus der sich die Stempelkontur ergibt, und die Ziehrahmenfläche. Aus den Abmessungen der Ziehrahmenfläche ergibt sich die Grundfläche des Werkzeugausgangsmaterials bzw. bei Gußwerkzeugen die Grundfläche des Modellblocks, welcher aus Exporit hergestellt wird. Es sind aber auch andere Werkstoffe für die Modellblöcke der Bestandteile 10 bis 14 des Werkzeugs 2 geeignet. Die Höhe des Ausgangsmaterials wird für die Matrize aus dem maximalen Ziehweg bestimmt.

Im Ausgangsmaterialblock werden die Ziehrahmenfläche und die Stempelkontur vorgegeben. Anschließend werden zwei Hilfskonstruktionsflächen bestimmt. Eine von ihnen ist parallel zur Stempelaußenfläche angeordnet und definiert den Abstand zwischen Stempel und Matrize. Die zweite Hilfskonstruktionfläche legt die minimale Dicke der Ziehrahmenfunktionsfläche fest.

Diese hängt von der zulässigen Durchbiegung der Ziehrahmenfläche und dem maximalen Durchmesser der Verrippungshohlräume ab. Nun wird das Verrippungsmuster ausgewählt, d.h. die Anordnung der kanalartigen Aussparungen und deren Querschnitt. Dazu wird zunächst die minimale Wandstärke zwischen benachbarten kanalartigen Aussparungen bestimmt, die für den jeweiligen Gußwerkstoff notwendig ist. Ziel ist es, eine möglichst geringe Wandstärke zu erreichen.

Bei durch mechanische Bearbeitung erzeugten Verrippungen kann die Wandstärke sehr klein gewählt werden. Ausgehend von der erforderlichen vertikalen Drucksteifigkeit der Bestandteile 10 bis 14 wird der notwendige tragende Flächenanteil bestimmt. Daraus wiederum läßt sich die Größe der Querschnitte ermitteln. Danach wird das Verrippungsmuster der Grundfläche des Ausgangsblocks aufgeprägt, wobei die Stempelkontur ausgespart wird.

Die Verrippungshohlräume werden dadurch erzeugt, daß die Verrippungsmuster senkrecht zur Werkzeuggrundfläche bis zu der Hilfkonstruktionsfläche parallel zur Ziehrahmenfläche hochgezogen werden. Anschließend werden die Verrippungshohlräume und die Stempelaussparung gefräst.

Als nächstes werden zwei weitere Hilsfskonstruktionflächen für die Bearbeitungsaufmaße parallel zur Ziehrahmenfläche und zur Stempelaußenfläche erzeugt. Die Funktionsflächen mit den entsprechenden Aufmaßen werden gefräst. Bei Gußwerkzeugen erfolgt anschließend der Abguß. Zum Schluß werden die Funktionsflächen mechanisch bearbeitet.

Der Niederhalter (Bestandteil 14) weist pinolenseitig eine Deckplatte 22 auf, um auf Ziehanlagen mit unterschiedlichen Pinolenbildern einsetzbar zu sein.

FIG 2 zeigt Verrippungsprofile 30 bis 36. Generell können beliebige Muster aus runden oder eckigen Konturen als Verrippungsmuster herangezogen werden.

Die Verrippungsgeometrie 30 weist kanalartige Aussparungen mit einem wabenartigen sechseckigen Querschnitt 38 auf. Es sind aber auch andere hier nicht dargestellte mehreckige Querschnitte geeignet. Die Verrippungsgeometrie 32 weist dreieckige Querschnitte 38 auf, wohingegen die Verrippungsgeometrien 34 und 36 kreisförmige Querschnitte 38 aufweisen. Im Verrippungsprofil 34 haben die kreisförmigen Querschnitte 38 eine einheitliche Größe, wohingegen im Verrippungsprofil 36 Querschnitte 38 mit zwei verschiedenen Durchmessern vorgesehen sind.

Bei der wabenförmigen Verrippungsgeometrie 30 ist eine sehr hohe Steifigkeit bei einem sehr geringen Werkzeuggewicht gegeben. Zudem ist die Flächenpressung in der Kontaktfläche zwischen Werkzeug und Blech sehr gleichmäßig. Nachteil ist der im Vergleich zu den oben genannten Verrippungsgeometrien mit kreisförmigen Querschnitten 38 deutlich höhere Fräsaufwand bei der Erstellung von Exporitmodellen. Vorzugsweise werden kreisförmige, rechteckige oder sechseckige Konturen eingesetzt.

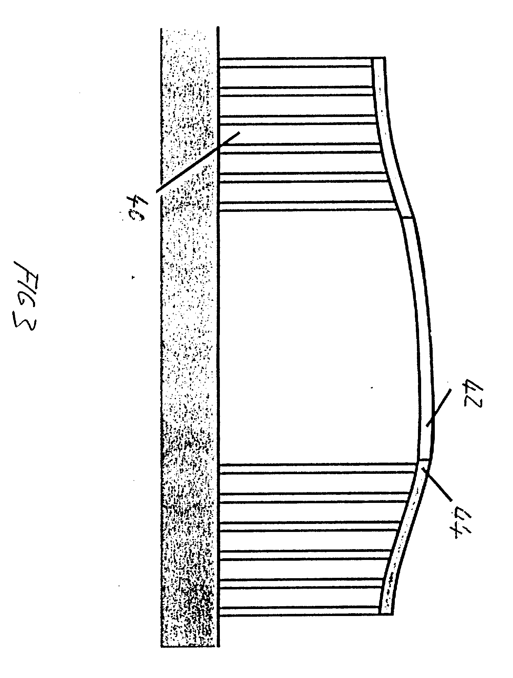

Die Verrippungsstrategie bezieht sich auf eine Verrippung mit einem Muster von prismatischen Hohlräumen. Diese prismatischen Hohlräume können eine beliebige Grundfläche haben, die senkrecht oder angenähert senkrecht zur Werkzeuggrundfläche gezogen werden und die Hohlräume bilden. Über den Extrusionsweg des prismatischen Volumens sind geringe Änderungen der Querschnittfläche in Form und Flächeninhalt möglich. Das Verrippungsmuster beinhaltet eine größere Anzahl von prismatischen Hohlräumen (wenigstens 6 pro Seite des Werkzeuggrundkörper), die regelmäßig zueinander angeordnet sind. Alternativ zur Fertigung des Gießereimodells durch Fräsen aus Vollmaterial, kann das Modell gemäß FIG 3 auch mit einem vorgefertigten extrudierten Modellblock (40) in Rippenform aufgebaut werden, welcher beispielsweise aus Exporit besteht. Dabei wird der extrudierte Modellblock (40) parallel zur Ziehrahmenfläche gefräst. Auch die Stempelaussparung (42) wird aus dem Modellblock (40) gefräst. Auf den Modellblock (40) wird eine relativ dünne Modellplatte (44) aufgeklebt, welche ebenfalls aus Exporit bestehen kann. Dieses Verfahren ist besonders für Werkzeuge mit ebenen oder wenig gekrümmten Ziehrahmenflächen geeignet. Die Fertigungszeit für ein Gießereimodell läßt sich so deutlich reduzieren. Insbesondere durch die verkürzten Zeiten für die spanende Bearbeitung verringern sich die Herstellkosten erheblich.

## Patentansprüche

1. Werkzeug (2) zum Bearbeiten von metallischen blechartigen Formteilen (4), wobei das Werkzeug (2) wenigstens einen Bestandteil (10-14) zum Ausüben einer Kraft aufweist,
**dadurch gekenzeichnet**,
daß wenigstens einer der Bestandteile (10-14) des Werkzeugs (2) angenähert parallel zur kraftausübenden Richtung des Bestandteils (10-14) kanalartige Aussparungen (20) in einem vorgegebenen Muster aufweist, wobei sich die kanalartigen Aussparungen (20) wenigstens über einen Großteil der Länge des Bestandteils (10-14) erstrecken und einen vorgegebenen Querschnitt (38) aufweisen.

2. Werkzeug (2) nach Anspruch 1,
**dadurch gekennzeichnet**,
daß der Querschnitt (38) der kanalförmigen Aussparungen (20) kreisförmig ist.

3. Werkzeug (2) nach Anspruch 1,
**dadurch gekennzeichnet**,
daß der Querschnitt (38) der kanalförmigen Aussparungen (20) eckig, insbesondere sechseckig, ist.

4. Werkzeug (2) nach einem der Ansprüche 1 bis 3,
**dadurch gekennzeichnet**,
daß der Abstand zwischen benachbarten kanalförmigen Aussparungen (20) minimal ist.

5. Werkzeug (2) nach einem der Ansprüche 1 bis 4,
**dadurch gekennzeichnet**,
daß das Werkzeug (2) ein Ziehwerkzeug ist, welches als Bestandteile (10-14) eine Matrize, einen Ziehstempel und einen Niederhalter enthält.

6. Werkzeug (2) nach Anspruch 5,
**dadurch gekennzeichnet**,
daß der Niederhalter kanalartige Aussparungen (20) aufweist und pinolenseitig mit einer Deckplatte (22) versehen ist, um auf Ziehanlagen mit unterschiedlichen Pinolenbildern einsetzbar zu sein.

7. Werkzeug (2) nach einem der Ansprüche 1 bis 4,
**dadurch gekennzeichnet**,
daß das Werkzeug (2) einen Aufbau zum Tiefziehen, zum Nachformen, zum Schneiden oder zum Abkanten aufweist.

8. Verfahren zum Herstellen eines Werkzeugs (2) nach einem der Ansprüche 1 bis 7,
**dadurch gekennzeichnet**,
daß ein Gießereimodell zur Herstellung wenigstens einer der Bestandteile (10-14) des Werkzeugs (2) aus wenigstens einem extrudierten Modellblock (40) mit kanalartigen Aussparungen (20) und wenigstens einer auf dem extrudierten Modellblock (40) angeordneten Modellplatte (44) aufgebaut wird.

9. Verfahren nach Anspruch 8,
**dadurch gekennzeichnet**,
daß als Werkstoff für das Gießereimodell Exporit verwendet wird.
